# EUROPEAN PATENT APPLICATION

(11) **EP 4 729 246 A1**
(43) Date of publication of application: **22.04.2026**
(21) Application number: 24207927.5
(22) Date of filing: 21.10.2024
(51) Int. Cl.: B25J 9/16, G06V 10/20

(54) **COMPUTER-IMPLEMENTED METHOD FOR PICKING UP AN OBJECT FROM A DEFINED AREA**

(71) Applicant: TOYOTA JIDOSHA KABUSHIKI KAISHA, Aichi-ken, 471-8571 (JP)
(72) Inventor: SUGINO, Takuma, 1140 BRUSSELS (BE); MEIER, Sven, 1140 BRUSSELS (BE)
(74) Representative: Cabinet Beau de Loménie

(57) **Abstract**

A computer-implemented method (20) for picking up a pickable object from a plurality of pickable objects arranged in a defined area, the computer-implemented method comprising capturing (21) an image of the defined area, processing (22) the image using a first trained model to identify at least one pickable object with a visibility degree meeting or exceeding a predetermined threshold, and selecting (23) the at least one identified object for pickup in descending order of confidence score.

## Description

### BACKGROUND OF THE INVENTION

### 1. Field of the invention

The present disclosure relates to the field of machine learning, specifically focusing on computer vision and image processing. In particular, the invention relates to a method and an apparatus for picking up a pickable object from a plurality of pickable objects arranged in a defined area.

### 2. Description of Related Art

Image segmentation and object detection (which are both computer vision methods) are foundational techniques used across various domains such as automotive traffic management, medical imaging, and satellite imagery analysis. Image segmentation involves partitioning images into meaningful segments, whereas object detection focuses on identifying and localizing individual objects within a scene. For instance, in automotive traffic management, object detection is important for identifying vehicles, pedestrians, and road markings, for applications like autonomous driving and traffic flow optimization.

In the context of object picking, object detection for example can be used in identifying and isolating individual objects within a cluttered environment. This is important for robotic systems tasked with picking objects, as the accuracy of object detection directly impacts the efficiency and reliability of the picking process. By leveraging object detection, a vision system can discern the boundaries and features of objects, enabling precise localization and manipulation.

Traditional methods for picking objects often involve estimating the 6D pose of target object, where 6D pose encompasses both the position (x, y, z coordinates) and orientation (roll, pitch, yaw angles) of an object. Various 6D pose estimation techniques also rely on RGB data to interpret the spatial attributes of an object. These methods can provide accurate pose information, but practical applications demand a prior selection of pickable objects. This is due to the challenge of occlusion, where some objects may be partially or wholly hidden behind others, making them unpickable with conventional pose estimation techniques. Therefore, it is important to first identify which objects are accessible before attempting to estimate their precise pose.

To determine the optimal order of picking objects, depth information is typically used, which often involves assessing the height of objects within the environment. Depth information provides insight into the relative distances of objects from the camera, which is important for prioritizing which object to pick first, especially in cluttered or stacked environments. However, it is important to note that if the camera is positioned directly above the pile, the nearest object to the camera will only be the topmost one in an unsorted pile of objects.

Acquiring accurate depth information usually requires specialized sensors, such as stereo cameras or Time-of-Flight (ToF) cameras. These sensors are more expensive than single RGB cameras and can add significant cost to the system. While there are software solutions designed to estimate depth using only RGB images, their accuracy is often insufficient, particularly in the presence of occluded objects. These depth estimation techniques can be computationally intensive, further complicating their practical application in real-time object picking scenarios.

Addressing these challenges requires a method and apparatus that effectively use object detection or image segmentation to improve object identification and picking processes.

### SUMMARY

The object of the present invention is to at least substantially remedy the above-mentioned drawbacks.

In this respect, the present invention relates to a computer-implemented method for picking up a pickable object from a plurality of pickable objects arranged in a defined area, the computer-implemented method comprising capturing an image of the defined area, processing the image using a first trained model to identify at least one pickable object with a visibility degree meeting or exceeding a predetermined threshold, and selecting the at least one identified object for pickup in descending order of confidence score.

The captured image serves as an input for the subsequent processing stages. The capturing device can be a standard RGB camera, which is a cost-effective alternative to more expensive depth-sensing cameras. Such captured image represents a view of the defined area where the objects are located, and wherein the objects may be arranged according to various types of organizations (arrangements). For example, the objects may be stacked on top of each other in multiple layers. This is common in storage bins or shelves where items are placed in a vertical sequence. Alternatively, the objects may be placed in a systematic and organized manner, such as in rows, columns, or grids. The objects may also be scattered without any specific order or pattern. This scenario is typical in environments where items are dropped into bin or on a conveyor belt in a haphazard manner.

Regardless of the type of arrangement, the defined area signifies a spatial boundary within which the objects are confined. The boundary is advantageous for the trained model to focus its analysis and delimitation efforts, ensuring that the image processing tasks are concentrated on the relevant region where picking operations will occur.

The captured image is then processed using the first trained model specifically designed for computer vision including image segmentation or object detection. This first model identifies and isolates pickable objects within the captured image by detecting their boundaries. The detection process is important as it enables the identification and the isolation of individual objects from the cluttered background.

After detecting the boundaries, the method evaluates the visibility of each identified object. Visibility refers to how much of an object is unobstructed and discernible within the image. The method thus assigns a visibility degree to each object, and only those objects with a visibility degree meeting or exceeding a predetermined threshold are considered for picking. This step is advantageous to ensure that the objects selected for pickup are sufficiently exposed and accessible, thereby reducing the risk of failed picking attempts due to occlusion.

The next step comprises ranking the identified objects based on a confidence score. The confidence score reflects the likelihood that a given object can be successfully picked up. The method then selects the objects for pickup in descending order of their confidence scores, prioritizing those with the highest scores. This prioritization ensures that the most easily accessible and clearly identifiable objects are picked first, optimizing the efficiency of the picking process.

Of course, the method can incorporate feedback mechanisms to continuously improve its performance. For instance, after each picking attempt, the method can comprise analyzing the outcome and then adjust the confidence scoring or vision (detection and/or segmentation) parameters accordingly. This adaptive approach allows the trained model to learn from each picking attempt, gradually enhancing its accuracy and reliability over time.

By leveraging computer vision and a confidence-based selection process, the present invention provides a robust and cost-effective solution for object picking. It eliminates the need for expensive depth-sensing equipment, relying instead on advanced image processing techniques to achieve high accuracy and efficiency. This method is thus particularly advantageous in industrial applications where cost constraints and operational efficiency are paramount.

Optionally, when the visibility degree of all the pickable objects is below the predetermined threshold, the first model is substituted with a subsequent model in an iterative sequence of subsequent models, the subsequent model being trained to identify at least one pickable object with a visibility degree meeting or exceeding the predetermined threshold updated to be reduced by a predetermined value, the processing step being repeated with the subsequent models until a subsequent model of the sequence identifies at least one pickable object with a visibility degree meeting or exceeding the updated predetermined threshold.

The present invention may address situations where the visibility degree of all pickable objects is below a predetermined threshold. In such cases, the method employs an adaptive approach using an iterative sequence of models to ensure successful identification of pickable objects.

Initially, the captured image is processed using a first trained model designed to identify pickable objects with a visibility degree meeting or exceeding the predetermined threshold. This threshold represents the minimum visibility level required for an object to be considered pickable, ensuring that only sufficiently visible objects are selected.

However, there may be instances where the visibility degree of all objects in the image falls below this threshold, making it impossible for the first model to identify any pickable objects. It is thus advantageous to substitute the first model with a subsequent model that is part of an iterative sequence of models, each trained to identify objects with progressively lower visibility thresholds.

When the first model fails to identify any pickable objects, the visibility threshold is updated by reducing it by a predetermined value. A subsequent model, trained with this new, lower threshold, is then used to reprocess the image. This step is repeated iteratively: each time a model fails to identify pickable objects, the threshold is further reduced, and the next model in the sequence is used.

This iterative process continues until a model in the sequence successfully identifies at least one pickable object with a visibility degree meeting or exceeding the updated, lower threshold. By progressively lowering the visibility threshold, the invention may ensure that even objects with lower visibility degrees, which may have been initially overlooked, can eventually be identified and selected for picking.

This adaptive method is advantageous as it ensure high accuracy and efficiency in varying conditions. The objects are reliably picked even when initial visibility is low. By using a sequence of models with decreasing visibility thresholds, the invention provides with these optional steps a more robust solution for handling a wide range of object visibility scenarios without the need for expensive hardware upgrades and without the need of any depth information.

Optionally, the image is a 2D image.

Using 2D images significantly reduces hardware costs. 3D imaging systems, such as stereo cameras or Time-of-Flight (ToF) sensors, are much more expensive than standard 2D cameras. Accordingly, processing 2D images allows for the use of more affordable and widely available camera technology, making the solution cost-effective for various applications. Further, 2D images systems are simpler to set up and to integrate into existing environments compared to 3D systems. They require fewer calibration steps and less complex software for image capture and processing. This simplicity leads to faster deployment and lower maintenance requirements, making it easier to implement and manage. Processing 2D images also requires less computational power than processing 3D data. By using 2D images, the system integrating the method of the invention achieves high-speed processing and quick response times, enhancing overall efficiency and performance. Finally, 2D images require less storage space and lower bandwidth for transmission compared to 3D data.

Optionally, the image is an RGB image, a grayscale image, or a multispectral image.

Optionally, the image is a top-down view of the delimited area or an image taken from a specific oblique angle of the delimited area.

A top-down view image is captured from directly above the delimited area. This perspective may provide a clear and unobstructed view of the objects within the area. It is particularly useful for scenarios where the spatial arrangement and positions of the objects need to be accurately determined. The top-down view minimizes the effects of occlusion, ensuring that each object's location can be precisely identified. Alternatively, an image taken from a specific oblique angle comprises capturing the delimited area from a viewpoint that is neither directly above nor from the side but at an angle. This perspective offers several advantages, such as highlighting the shapes and contours of the objects. An oblique angle view can help in distinguishing between overlapping objects and understanding their three-dimensional relationships.

Optionally, the first model and each subsequent model of the iterative sequence of subsequent model is a convolutional neural network.

Convolutional Neural Networks (CNNs) are specifically designed for processing grid-like data, such as images. In the context of the present invention, both the first model and each subsequent model in the iterative sequence may be Convolutional Neural Networks.

Certainly, while Convolutional Neural Networks are highly effective for image-related tasks, other types of deep learning models can also be used depending on the specific requirements of the application, for instance, Recurrent Neural Networks (RNNs).

The present invention further relates to a computer program set including instructions for executing the steps of the above-described method when said program set is executed by at least one computer.

This program set can use any programming language and take the form of source code, object code, or a code intermediate between source code and object code, such as a partially compiled form or any other desirable form.

The present invention further relates to a recording medium readable by at least one computer and having recorded thereon at least one computer program including instructions for executing the steps of the above-described method.

The present invention further relates to an apparatus for picking up a pickable object from a plurality of pickable objects arranged in a defined area, the apparatus comprising:
- a capturing module configured to capture an image of the defined area;
- a processing module configured to process the image using a first trained model to identify at least one pickable object with a visibility degree meeting or exceeding a predetermined threshold; and
- a selecting module configured to select the at least one identified object for pickup in descending order of confidence score.

The apparatus referred to hereinafter as the picking apparatus, may be configured to carry out the above-mentioned training method and may have part of all of the above-described features. For instance, at least one of said modules (one or more modules among these modules) is located on a cloud which typically refers to a network of remote servers accessed over the internet to store, manage and process data rather than on a local server or personal computer. Accordingly, one specific module or a plurality of modules of the picking apparatus is hosted or operated within the cloud rather than residing on a local server. It means that the functions or operation of the or these module(s) are carried out using cloud-based resources or services.

Of course, the picking apparatus may have a hardware structure of a computer which refers to the physical components and architecture that make up the computer system. These components include for example the central processing unit (CPU) and memory modules (such as RAM for "Random-Access Memory").

The present invention further relates to an automaton comprising the above-described apparatus.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a block diagram of a picking apparatus according to an embodiment of the present invention; and
- FIG. 2 is a flowchart of a picking method according to an embodiment of the present invention.

### DETAILED DESCRIPTION OF EMBODIMENTS

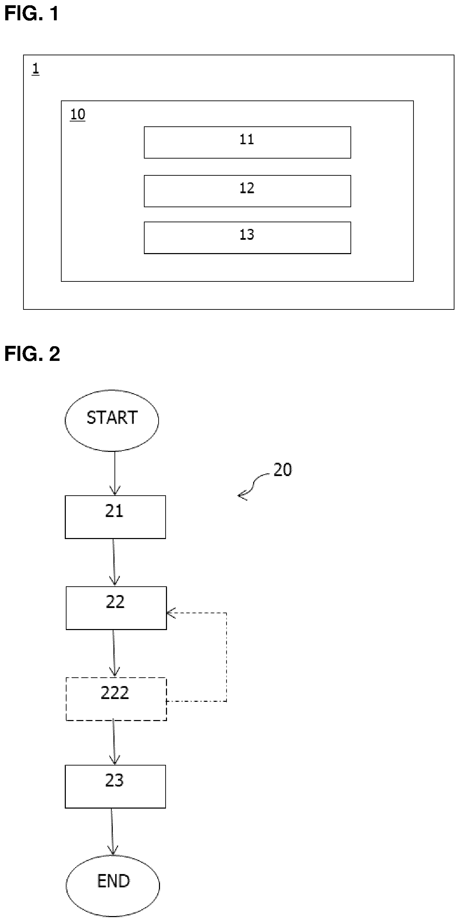

Figure 1 shows a block diagram of a picking apparatus 10 comprising a capturing module 11, a processing module 12, and a selecting module 13 according to embodiments of the present invention. The picking apparatus 10 may be located partially or completely inside or outside an automaton 1. The automaton 1 may be directed to an apparatus capable of picking objects using gripping means for example.

Alternatively or additionally, one module or a plurality of modules among the modules of the picking apparatus 10 may be hosted or operated within a cloud (extern server) rather than residing on a local server.

The picking apparatus 10 may be configured to pick up at least one pickable object from a plurality of pickable objects arranged in a defined area.

The picking apparatus 10 may comprise an electronic circuit, a processor (shared, dedicated, or group), a combinational logic circuit, a memory that executes one or more software programs, and/or other suitable components that provide the described functionality. In other words, the picking apparatus 10 may be connected to a memory, which may store data, e.g. at least one computer program, which, when executed, carries out the picking method according to the present invention.

For example, the memory can be a ROM (for "Read Only Memory"), a CD ROM, a microelectronic circuit ROM, or in the form of magnetic storage means, for example, a diskette (floppy disk), a flash disk, a SSD (for "Solid-State Drive") or a hard disk. Alternatively, the memory can be an integrated circuit in which the program is incorporated, the circuit being adapted to execute the picking method or to be used in its execution.

One application of the picking apparatus may be in the industry. For example, the picking apparatus 10 may be used in an e-commerce warehouse where hundreds of different products are stored in bins, each bin can hold multiple units of a specific product, making it usually easier for workers to located and pick the items (objects). The picking apparatus 10 is here an automated system that replaces a worker in locating and picking the items arranged in the defined area.

The defined area is a zone where the objects are located, and wherein these objects may be arranged according to various types of organizations (arrangements). For example, the objects may be stacked on top of each other in multiple layers. This is common in storage bins or shelves where items are placed in a vertical sequence. Alternatively, the objects may be placed in a systematic and organized manner, such as in rows, columns, or grids. The objects may also be scattered without any specific order or pattern. This scenario is typical in environments where items are dropped into bin or on a conveyor belt in a haphazard manner.

The capturing module 11 is a module configured to capture an image of the defined area. The captured image serves as the input for the subsequent processing stages performed by the picking apparatus 10. The capturing device can be (without limitation) a standard RGB camera, which is a cost-effective alternative to more expensive depth-sensing cameras.

The captured image may be a 2D image which is advantageous because using 2D images significantly reduces hardware costs. 3D imaging systems, such as stereo cameras or Time-of-Flight (ToF) sensors, are much more expensive than standard 2D cameras. Accordingly, processing 2D images allows for the use of more affordable and widely available camera technology, making the solution cost-effective for various applications. Further, 2D images systems are simpler to set up and to integrate into existing environments compared to 3D systems. They require fewer calibration steps and less complex software for image capture and processing. This simplicity leads to faster deployment and lower maintenance requirements, making it easier to implement and manage. Processing 2D images also requires less computational power than processing 3D data. By using 2D images, the system integrating the method of the invention achieves high-speed processing and quick response times, enhancing overall efficiency and performance. Finally, 2D images require less storage space and lower bandwidth for transmission compared to 3D data.

The captured image, whether 2D or not, may be a RGB image, a grayscale image, or a multispectral image, and may be a top-down view of the delimited area or an image taken from a specific oblique angle of the delimited area. In fact, a top-down view image is captured from directly above the delimited area. This perspective may provide a clear and unobstructed view of the objects within the area. It is particularly useful for scenarios where the spatial arrangement and positions of the objects need to be accurately determined. The top-down view minimizes the effects of occlusion, ensuring that each object's location can be precisely identified. Alternatively, an image taken from a specific oblique angle comprises capturing the delimited area from a viewpoint that is neither directly above nor from the side but at an angle. This perspective offers several advantages, such as highlighting the shapes and contours of the objects. An oblique angle view can help in distinguishing between overlapping objects and understanding their three-dimensional relationships.

The capturing module 11 may be implemented as software running on the picking apparatus 10 or may be implemented partially or fully as a hardware element of the picking apparatus 10.

The processing module 12 is a module configured to process the captured image using a first trained model to identify at least one pickable object with a visibility degree meeting or exceeding a predetermined threshold.

The first trained model is specifically designed for computer vision. The computer vision refers to the field that enables machines to interpret and understand visual information. This encompasses various techniques as the image segmentation or object detection. Image segmentation involves partitioning an image into distinct regions or segments, allowing the module to identify and isolate different objects within a scene. On the other hand, the object detection focuses on identifying and locating specific objects within an image.

This first trained model identifies and isolates pickable objects within the captured image by detecting their boundaries and optionally segmenting them into meaningful regions. This process is important as it enables to discern individual objects from the cluttered background. After this detection, the processing module 12 evaluates the visibility of each identified object. Visibility refers to how much of an object is unobstructed and discernible within the image. The processing module 12 thus assigns a visibility degree to each object, and only those objects with a visibility degree meeting or exceeding a predetermined threshold are considered for picking.

However, there may be instances where the visibility degree of all objects in the image falls below this threshold, making it impossible for the first model to identify any pickable objects. It is thus advantageous to substitute the first model with a subsequent model that is part of an iterative sequence of models, each trained to identify objects with progressively lower visibility thresholds.

Accordingly, when the first model fails to identify any pickable objects, the processing module 12 is configured to update the visibility threshold by reducing it by a predetermined value. A subsequent model, trained with this new, lower threshold, is then used by the processing module 12 to reprocess the image. For instance, the first model may be trained to detect objects with more than 80% visibility. The subsequent model may be trained to detect objects having between 60 and 80% visibility, which means that the subsequent model can detect objects under challenging conditions where most of the objects in the delimited area are occluded.

The processing module 12 is then configured to repeat iteratively the following sequence: each time a model fails to identify pickable objects, the threshold is further reduced, and the next model in the sequence is used. In other words, the processing module 12 is configured to perform this iterative process until a model in the sequence successfully identifies at least one pickable object with a visibility degree meeting or exceeding the updated, lower threshold.

Such first model and/or each subsequent model of said sequence may be a convolutional neural network (CNN). Accordingly both the first model and each subsequent model in the iterative sequence may be Convolutional Neural Networks.

Certainly, while Convolutional Neural Networks are highly effective for image-related tasks, other types of deep learning models can also be used depending on the specific requirements of the application, for instance, Recurrent Neural Networks (RNNs).

The processing module 12 may be implemented as software running on the picking apparatus 10 or may be implemented partially or fully as hardware element of the picking apparatus 10. In particular, the picking apparatus 10 may comprise a program that includes both the capturing module 11 and the processing module 12. Alternatively, the capturing module 11 may be realized as independent program (in particular, beside a program forming the processing module 12).

The selecting module 13 is a module configured to select at least one identified object for pickup in descending order of confidence score.

The confidence score reflects the likelihood that a given object can be successfully picked up. The selecting module 13 is thus configured to select the objects for pickup in descending order of their confidence scores, prioritizing those with the highest scores. This prioritization ensures that the most easily accessible and clearly identifiable objects are picked first, optimizing the efficiency of the picking process.

The selecting module 13 may be implemented as software running on the picking apparatus 10 or may be implemented partially or fully as hardware element of the picking apparatus 10. In particular, the picking apparatus 10 may comprise a program that includes the capturing module 11, the processing module 12 and the selecting module 13. Alternatively, and without limitation, the selecting module 13 may be realized as independent program (in particular, beside a program forming the processing module 12 and the capturing module 11).

Of course, the picking apparatus 10 can incorporate feedback mechanisms to continuously improve its performance. For instance, after each picking attempt, the picking apparatus 10 can comprise analyzing means for analyzing the outcome and then adjust the confidence scoring or vision parameters accordingly. This adaptive approach that may be performed by the picking apparatus 10 allows the trained model to learn from each picking attempt, gradually enhancing its accuracy and reliability over time.

The steps carried out by the picking apparatus 10 are detailed hereinafter with respect to the corresponding picking method, an embodiment of which is illustrated in Fig. 2.

Fig. 2 is a flowchart of the picking method 20 according to an embodiment of the present invention. The picking method 20 is performed for picking up a pickable object from the plurality of pickable objects arranged in the defined area.

To this end, the picking method 20 comprises a step 21 of capturing an image of the defined area. The step 21 is performed by the capturing module 11.

As explained above, the captured image may be a 2D image and, whether 2D or not, the captured image may be a RGB image, a grayscale image, or a multispectral image. Additionally, the captured image may be a top-down view of the delimited area or an image taken from a specific oblique angle of the delimited area. In fact, a top-down view image is captured from directly above the delimited area.

That is, the picking method 20 comprises a step 22 of processing the image using the first trained model to identify at least one pickable object with a visibility degree meeting or exceeding a predetermined threshold. This step 22 is performed by the processing module 12.

However, as explained above, there may be instances where the visibility degree of all objects in the image falls below this threshold, making it impossible for the first model to identify any pickable objects. It is thus advantageous to substitute the first model with a subsequent model that is part of an iterative sequence of models, each trained to identify objects with progressively lower visibility thresholds.

Accordingly, when the first model fails to identify any pickable objects, the picking method 20 comprises a substep 222 of updating the visibility threshold by reducing it by a predetermined value. A subsequent model, trained with this new, lower threshold, is then used by the processing module 12 to reprocess the image. The substep 222 is then repeated to perform iteratively the following sequence: each time a model fails to identify pickable objects, the threshold is further reduced, and the next model in the sequence is used.

In other words, the substep 222 is repeated until a model in the sequence successfully identifies at least one pickable object with a visibility degree meeting or exceeding the updated, lower threshold. Of course, the number of objects to be identified with such visibility degree can be chosen by a person skilled in the art. Accordingly, this number is not limited to a unique object. The number of identified objects may be 3 or 4 for example.

Finally, when the processing module 12 identifies one pickable object with a visibility degree meeting or exceeding the (updated) threshold, the picking method 20 comprises a step 23 of selecting the at least one identified object for pickup in descending order of confidence score. This step 23 is performed by the selecting module 13.

Of course, the picking method 20 can incorporate feedback optional steps to continuously improve its performance. For instance, after each picking attempt, the picking method 20 can comprise a step of analyzing the outcome and then a step of adjusting the confidence scoring or vision parameters accordingly. This adaptive approach allows the trained model to learn from each picking attempt, gradually enhancing its accuracy and reliability over time.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented method (20) for picking up a pickable object from a plurality of pickable objects arranged in a defined area, the computer-implemented method comprising capturing (21) an image of the defined area, processing (22) the image using a first trained model to identify at least one pickable object with a visibility degree meeting or exceeding a predetermined threshold, and selecting (23) the at least one identified object for pickup in descending order of confidence score.

2. The computer-implemented method (20) according to claim 1, wherein when the visibility degree of all the pickable objects is below the predetermined threshold, the first model is substituted with a subsequent model in an iterative sequence of subsequent models, the subsequent model being trained to identify at least one pickable object with a visibility degree meeting or exceeding the predetermined threshold updated to be reduced by a predetermined value, the processing step being repeated (222) with the subsequent models until a subsequent model of the sequence identifies at least one pickable object with a visibility degree meeting or exceeding the updated predetermined threshold.

3. The computer-implemented method (20) according to claim 1 or 2, wherein the image is a 2D image.

4. The computer-implemented method (20) according to claim 3, wherein the image is an RGB image, a grayscale image, or a multispectral image.

5. The computer-implemented method (20) according to any one of claims 1 to 4, wherein the image is a top-down view of the delimited area or an image taken from a specific oblique angle of the delimited area.

6. The computer-implemented method (20) according to any one of claims 1 to 5, wherein the first model and each subsequent model of the iterative sequence of subsequent model is a convolutional neural network.

7. A computer program set including instructions for executing the steps of the method (20) of any one of claims 1 to 6 when said program set is executed by at least one computer.

8. A recording medium readable by at least one computer and having recorded thereon at least one computer program including instructions for executing the steps of the method of any one of claims 1 to 6.

9. An apparatus (10) for picking up a pickable object from a plurality of pickable objects arranged in a defined area, the apparatus comprising:
- a capturing module (11) configured to capture an image of the defined area;
- a processing module (12) configured to process the image using a first trained model to identify at least one pickable object with a visibility degree meeting or exceeding a predetermined threshold; and
- a selecting module (13) configured to select the at least one identified object for pickup in descending order of confidence score.

10. An automaton (1) comprising an apparatus (10) according to claim 9.

## Amended claims

### Amended claims in accordance with Rule 137(2) EPC.

1. A computer-implemented method (20) for picking up a pickable object from a plurality of pickable objects arranged in a defined area, the computer-implemented method comprising capturing (21) an image of the defined area, processing (22) the image using a first trained model trained to identify at least one pickable object only with a visibility degree meeting or exceeding a first predetermined threshold, the visibility referring to how much of an object is unobstructed and discernable, and selecting (23) the at least one identified object for pickup in descending order of confidence score reflecting the likelihood that a given object can be successfully picked up, the method being **characterized in that** it further comprises an iterative sequence of subsequent models being trained to identify only pickable objects having a visibility degree meeting or exceeding a specific threshold, the specific threshold being lower for each subsequent model, wherein when the visibility degree of all the pickable objects is below the first predetermined threshold, the method comprises a substep (222) of :
- updating the first predetermined threshold by reducing it by a predetermined value;
- using a subsequent model of the iterative sequence of subsequent models, trained with the updated predetermined threshold, to reprocess the image to identify at least one pickable object with a visibility degree meeting or exceeding the updated predetermined threshold,
the substep (222) is then repeated to perform iteratively the following sequence:
- until a subsequent model in the sequence successfully identifies at least one pickable object with a visibility degree meeting or exceeding the updated predetermined threshold, the updated predetermined threshold is further reduced, and the next subsequent model, which is trained with the reduced predetermined threshold, in the sequence is used.

2. The computer-implemented method (20) according to claim 1, wherein the image is a 2D image.

3. The computer-implemented method (20) according to claim 2, wherein the image is an RGB image, a grayscale image, or a multispectral image.

4. The computer-implemented method (20) according to any one of claims 1 to 3, wherein the image is a top-down view of the delimited area or an image taken from a specific oblique angle of the delimited area.

5. The computer-implemented method (20) according to any one of claims 1 to 4, wherein the first model and each subsequent model of the iterative sequence of subsequent model is a convolutional neural network.

6. A computer program set including instructions for executing the steps of the method (20) of any one of claims 1 to 5 when said program set is executed by at least one computer.

7. A recording medium readable by at least one computer and having recorded thereon at least one computer program including instructions for executing the steps of the method of any one of claims 1 to 5.

8. An apparatus (10) for picking up a pickable object from a plurality of pickable objects arranged in a defined area, the apparatus comprising:
- a capturing module (11) configured to capture an image of the defined area;
- a processing module (12) configured to process the image using a first trained model trained to identify at least one pickable object only with a visibility degree meeting or exceeding a first predetermined threshold, the visibility referring to how much of an object is unobstructed and discernable; and
- a selecting module (13) configured to select the at least one identified object for pickup in descending order of confidence score reflecting the likelihood that a given object can be successfully picked up,
the apparatus being **characterized in that** it comprises a storing module configured to comprise subsequent models trained to identify only pickable objects having a visibility degree meeting or exceeding a specific threshold, the specific threshold being lower for each subsequent model, the subsequent models being placed in an iterative sequence, wherein when the visibility degree of all the pickable objects is below the first predetermined threshold, the processing module (12) is configured to:
- update the first predetermined threshold by reducing it by a predetermined value;
- using a subsequent model of the iterative sequence of subsequent models, trained with the updated predetermined threshold, to reprocess the image to identify at least one pickable object with a visibility degree meeting or exceeding the updated predetermined threshold,
the processing module (12) being configured to repeat the execution of the substep to perform iteratively the following sequence:
- until a subsequent model in the sequence successfully identifies at least one pickable object with a visibility degree meeting or exceeding the updated predetermined threshold, the updated predetermined threshold is further reduced, and the next subsequent model, which is trained with the reduced predetermined threshold, in the sequence is used.

9. An automaton (1) comprising an apparatus (10) according to claim 8.
